# FASCICULE DE BREVET EUROPEEN

(11) **EP 3 564 076 B1**
(45) Date de publication et mention de la délivrance du brevet: **01.07.2020**
(21) Numéro de dépôt: 19170400.6
(22) Date de dépôt: 19.04.2019
(51) Int. Cl.: B60R 19/48, B62D 41/00

(54) **PARE-CHOCS A CAVITE DE CELLULE DE MARQUAGE EN COMMUNICATION AVEC L'EXTERIEUR**
STOSSFÄNGER MIT EINER NACH AUSSEN OFFENEN EINE MARKIERUNGSZELLE ENTHALTENEN AUSSPARUNG
BUMPER WITH A MARKING CELL CAVITY OPENED TO THE OUTSIDE

(30) Priorité: 04.05.2018 FR 1853846
(43) Date de publication de la demande: 06.11.2019
(73) Titulaire: Airbus (S.A.S.), 31700 Blagnac (FR)
(72) Inventeur: CHARLES, Julien, 31700 BLAGNAC (FR); FERRER, Guillaume, 31700 BLAGNAC (FR)
(74) Mandataire: Gicquel, Olivier Yves Gérard

(56) Documents cités:
- WO-A1-00/51875
- JP-A- H0 280 467
- US-A- 2 646 016
- US-A1- 2013 197 717

## Description

La présente invention concerne le domaine des pare-chocs et plus particulièrement des pare-chocs de véhicules. La présente invention s'intéresse plus particulièrement aux pare-chocs intégrant un système permettant de révéler un impact du véhicule sur une surface quelconque.

### DOMAINE TECHNIQUE

Des collisions peuvent survenir entre un véhicule de type équipement de support au sol (en terme anglo-saxons GSE - Ground Service Equipement) et un aéronef. Or certains aéronefs peuvent présenter des zones pour lesquelles un tel impact a une incidence sur la structure, comme par exemple celle du fuselage, sans que cela puisse être détecté à l'œil nu.

La présente invention a pour but de proposer un pare-chocs de véhicule muni d'un système de marquage en cas de collision permettant un remplacement aisé et rapide du système en cas d'activation du marquage.

Le document US 2013/0197717 A1 divulgue un véhicule comportant un pare-chocs et un système de marquage sous la forme d'une seringue.

### EXPOSE DE l'INVENTION

Pour ce faire, la présente invention propose un pare-chocs de véhicule caractérisé en ce qu'il comporte au moins une partie en matériau élastique présentant une portion frontale courbe formant une cavité intérieure, la portion frontale présentant des orifices permettant de mettre en communication ladite cavité avec l'extérieur de ladite partie élastique, au moins une cellule de fluide de marquage étant prévue à l'intérieur de la cavité et en ce qu'il comporte également des moyens de fixation destinés à la fixation audit véhicule.

De cette manière, il suffit de remplacer le pare-chocs pour remettre en fonction le véhicule ce qui est rapide et facile.

La présente invention concerne également un véhicule muni du pare-chocs décrit ci-dessus, ainsi qu'un procédé de marquage d'une surface avec laquelle ledit véhicule entre en collision.

### DESCRIPTION SOMMAIRE DES DESSINS

D'autres buts, avantages et caractéristiques de l'invention apparaîtront à la lecture de la description qui va suivre, description donnée à titre d'exemple non limitatif en référence aux dessins ci-annexés dans lesquels :
- les figures 1 à 3 représentent une vue schématique simplifiée en section longitudinale verticale d'un véhicule de support au sol respectivement se rapprochant d'un fuselage d'aéronef, en collision avec ce dernier, s'éloignant dudit fuselage après collision et muni d'un pare-chocs selon la présente invention ;
- la figure 4 représente une vue simplifiée de derrière d'une partie du cadre structurel de maintien des cellules de marquage ;
- la figure 5 représente une vue schématique simplifiée en section longitudinale verticale d'une autre forme de réalisation de la partie élastique d'un pare-chocs d'un véhicule de support au sol ne correspondant pas à l'invention;
- la figure 6 représente en coupe de manière simplifiée une cellule de marquage contenant selon une autre forme de réalisation des billes de fluide de marquage.

### MANIERE DE REALISER L'INVENTION

Le véhicule 2 donné à titre illustratif dans la description qui suit est un véhicule de type équipement de support au sol. Un tel véhicule peut être par exemple un véhicule de tractage pour le déplacement de l'aéronef au sol, un véhicule de transport d'un tapis à bagages, un véhicule de transport de bagages ou de conteneurs à bagages, de fret, de passagers, du personnel aéroportuaire ou des compagnies, un camion-citerne pour l'approvisionnement de l'aéronef en eau, en fuel ou autre, un véhicule de restauration pour le chargement et déchargement des trolleys par exemple, un véhicule de ravitaillement en eau potable ou autre, un véhicule vide-toilettes, un véhicule de transport de l'escalier d'embarquement/débarquement passagers ... La présente invention peut concerner tout autre type de véhicule.

Dans la description, le terme « transversal » s'entend dans le sens de la largeur du véhicule, le terme « longitudinal » s'entend d'une direction perpendiculaire à la direction transversale à savoir dans le sens de la longueur du véhicule. La direction perpendiculaire à la direction à la fois transversale et longitudinale est désignée par l'expression « en hauteur » et correspond à la direction verticale.

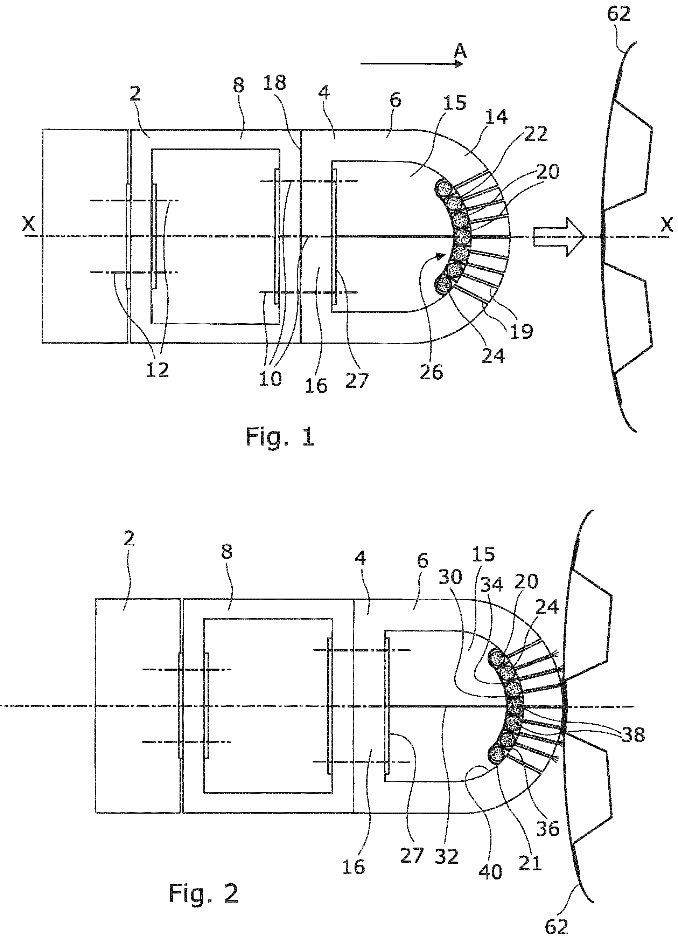

Les termes « avant » et « arrière » sont à considérer par rapport à la direction d'avancement du véhicule, cette direction étant représentée par une flèche A sur la figure 1.

Selon la forme de réalisation illustrée sur les figures 1 à 3, le véhicule 2 comprend un pare-chocs 4 présentant au moins une partie 6 élastique. Il comprend également une partie 8 non élastique constituant une ossature structurelle qui participe à la rigidité et à la transmission des efforts et à laquelle la partie 6 élastique est fixée par tout type de moyen. La partie 8 non élastique sera appelée dans ce qui suit partie structurelle. La partie 6 élastique est positionnée au moins partiellement en partie périphérique externe au niveau du pare-chocs. Dit autrement, la partie 6 élastique est positionnée longitudinalement au moins partiellement au niveau extrémal externe du pare-chocs. Dans la forme de réalisation illustrée, des traits pointillés symbolisent une jonction 10 par vis de type classique ; tout autre type de fixation peut être utilisé. Dans la forme de réalisation illustrée, la fixation de la partie 6 élastique à la partie 8 structurelle est démontable. La partie 6 élastique peut être séparée aisément de la partie 8 structurelle sans endommager celle-ci et retirée du véhicule 2. Dans le cas présent, il s'agit d'une jonction 10 par vis et il suffit donc d'effectuer un dévissage simple pour séparer la partie élastique du véhicule 2. De la même façon, comme le montrent les figures 1 à 3, la partie 8 structurelle est elle-même fixée par tout type de moyen à la carrosserie du véhicule 2 et par exemple de la même façon que pour la partie 6 élastique ; des traits pointillés symbolisent une jonction 12 par vis de type classique permettant le démontage facile de la partie 8 structurelle avec ou sans la partie 6 élastique suivant qu'elle ait été elle-même démontée ou non.

La partie 6 élastique du pare-chocs 4 a pour fonction d'amortir les impacts frontaux par sa déformation élastique le temps de la sollicitation ; si le choc n'a pas été trop violent, il reprend ensuite sa forme et sa dimension initiale en ayant empêché d'endommager le véhicule.

A titre illustratif, la partie 8 structurelle peut être métallique et la partie 6 élastique peut être constituée par un matériau de type caoutchouc.

Selon une autre forme de réalisation, le pare-chocs 4 présente une partie 6 élastique mais aucune partie non élastique. La partie 6 élastique est directement fixée à la carrosserie du véhicule 2. La carrosserie du véhicule constitue alors la partie 8 structurelle.

Les figures 1 à 3 représentent des sections longitudinales du véhicule 2 selon un plan vertical central au véhicule. Dans toute la suite de la description, on considère que le véhicule 2 repose sur un sol horizontal et que toute direction perpendiculaire au sol est verticale. De façon classique, le pare-chocs 4 s'étend transversalement à l'avant du véhicule 2 sur la majorité de la largeur de celui-ci voire au-delà en présentant des courbures de part et d'autre du véhicule pour suivre ses contours.

Comme le montrent les figures 1 à 3, la partie 6 élastique présente une forme bombée creuse. La partie 6 élastique comprend une portion frontale 14 présentant au moins partiellement une courbure de section convexe formant une cavité 15 intérieure. Dans la forme illustrée, elle présente également une portion arrière 16, appelée base, plane. La partie 6 élastique présente une section en D ; la base 16 forme la barre du D et est destinée à s'appliquer contre une surface 18 plane de la partie 8 structurelle pour s'y fixer. Dans cette forme de réalisation, la cavité 15 correspond à l'intérieur du D.

La portion frontale 14 comporte des orifices 19 permettant de mettre en communication ladite cavité 15 avec l'extérieur de ladite partie élastique. Les orifices 19 débouchent à une de leurs extrémités dans la cavité 15 et à l'autre à l'extérieur du pare-chocs. La direction suivie d'une extrémité à l'autre est une direction dite longitudinale et la section de l'orifice est prise dans un plan transversal par rapport à cette direction longitudinale. Les orifices sont de faibles dimensions transversalement par rapport à l'épaisseur de la portion frontale prise dans la direction longitudinale. Dans la forme illustrée, les orifices se présentent sous la forme de canaux 19 de forme cylindrique de section circulaire; le diamètre des orifices est comme vu précédemment plus petit que la longueur du canal 19.

La distance entre les extrémités extérieures débouchant sur l'environnement extérieur de deux canaux voisins est supérieure à la distance entre leurs extrémités intérieures débouchant dans la cavité 15. Les canaux 19 sont par exemple positionnés radialement.

La cavité 15 contient au moins une cellule 20 de fluide 22 de marquage. La cellule 20 présente tout type de forme permettant d'offrir un réservoir 24 de stockage du fluide de marquage.

Dans la forme illustrée sur les figures 1 à 3, les cellules 20 présentent une forme globalement sphérique. Les cellules comprennent une enveloppe 21 faite d'un matériau et d'une taille lui permettant de rompre sous l'effet d'une pression déterminée. Le matériau pourrait être par exemple choisi parmi un plastique. La cellule 20 est remplie au moins partiellement du fluide 22 de marquage.

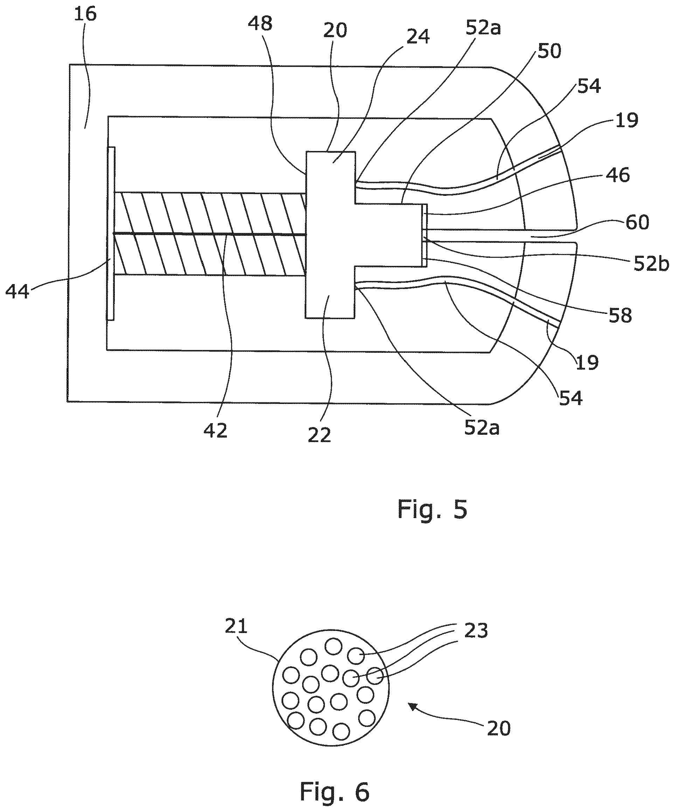

Alternativement, comme représenté sur la figure 6, le liquide peut être contenu dans des billes 23 logées à l'intérieur de la cellule 20. Quel que soit le mode de réalisation, les billes 23 rompent sous ladite pression déterminée.

Un cadre 26 structurel de maintien des cellules est fixé à la partie 6 élastique, ici à la base 16 et/ou à la partie 8 structurelle par tout type de moyen. Le cadre 26 peut par exemple présenter un pied 27 accolé à la base 16 ; des traits pointillés symbolisent un exemple de jonction qui peut être par exemple une fixation par vis de type classique permettant un démontage facile. Dans la forme illustrée, les pointillés des jonctions 10 de la partie élastique sur la partie structurelle se superposent avec celles utilisées pour la fixation du cadre 26. Les jonctions 10 permettent de maintenir le pied 27 du cadre 26. Le cadre 26 peut présenter tout type de forme permettant de répartir les cellules 20 sur une zone étendue en hauteur et transversalement et de les maintenir en vis-à-vis des orifices 19, ici les canaux. Il n'est pas nécessaire qu'à un orifice 19 corresponde une cellule 20. Il suffit que la rupture des cellules 20 se trouvant en vis-à-vis des orifices 19 permette au fluide 22 de marquage de s'écouler à travers eux. Plusieurs cadres 26 peuvent être prévus dans le sens transversal de manière à répartir les cellules transversalement le long du pare-chocs.

Le cadre 26 peut présenter tout type de forme permettant le maintien des cellules 20 contre la portion frontale 14.

Dans la forme illustrée, les cellules 20 sont prises en sandwich entre le cadre 26 et la portion frontale 14 : la rigidité du cadre 26 permet de retenir les cellules 20 en cas de choc et de permettre leur rupture avec la pression appliquée par la portion frontale.

Dans la forme de réalisation illustrée sur les figures 1 à 4, le cadre 26 comporte une goulotte 30. La goulotte 30 est maintenue contre la portion frontale 14 à l'aide d'un bras rigide 32 la reliant au pied 27. La goulotte se présente sous la forme d'un peigne courbe dont la courbure suit celle de la portion 14 frontale. Le peigne comporte une paroi 34 courbe pourvue de nervures 36 formant des alvéoles 38 à l'intérieur desquelles les cellules sont logées. La goulotte 30 est placée contre la surface 40 intérieure de la portion 14 frontale : les alvéoles 38 sont ainsi fermées par la surface 40. Les cellules sont maintenues entre la paroi 34 du peigne, les nervures 36 et la surface 40 intérieure de la portion frontale. Le bras 32 est fixé par tout type de moyen à la goulotte 30 ; il peut également être formé d'une seule pièce avec la goulotte 30.

Dans la forme illustrée, les cellules 20 de fluide de marquage sont prévues au moins partiellement le long de la courbure interne de la portion frontale en vis-à-vis desdits orifices. Sur un même axe longitudinal, une seule cellule 20 est prévue. Pour une meilleure efficacité, à savoir pour que le fluide de marquage puisse s'écouler à l'intérieur des orifices 19, les cellules 20 doivent se trouver au plus proche de l'extrémité des orifices. Selon la forme de réalisation illustrée, les cellules 20 sont en contact avec la surface 40 intérieure de la portion 14 frontale. Il est possible de prévoir plusieurs cellules longitudinalement.

Les cellules 20 sont réparties de manière à s'étendre en hauteur sur une partie au moins de l'étendue de la surface courbe de la portion frontale 14. Dans la forme illustrée, elles s'étendent sur plus de la moitié en hauteur de l'étendue de la surface courbe de la portion frontale 14. Dans la forme illustrée, les cellules 20 sont réparties de manière symétrique par rapport à un plan horizontal central X-X. Elles sont concentrées dans la partie extrémale avant de la portion frontale.

Les cellules 20 ne sont ni intégrées complètement à l'intérieur de la partie élastique ce qui nécessiterait un impact très important pour permettre au fluide d'être libéré des cellules ni complètement extérieures à celle-ci ce qui les exposeraient à tout type de choc pour lequel il n'est pas par exemple souhaité que le fluide soit déversé. Les cellules se trouvent protégées à l'intérieur de la cavité 15 formée par la partie élastique du pare-chocs tout en permettant au fluide de s'écouler en dehors du pare-chocs au travers des orifices 19 en cas de collision.

Selon une autre forme de réalisation de la cellule 20 illustrée sur la figure 5, qui ne correspond pas à l'invention, seule une cellule 20 est prévue verticalement à l'intérieur de la cavité 15. Cependant, il pourrait être prévu plusieurs cellules du même type selon une autre forme de réalisation dans lesquelles les dimensions de celles-ci permettraient d'en placer plusieurs verticalement. Plusieurs cellules sont prévues dans la direction transversale ou une seule s'étendant transversalement.

La cellule comme précédemment pour la goulotte est maintenue à l'intérieur de la cavité par au moins un bras 42 la reliant à un pied 44. Le pied 44 est fixé de la même manière que présentée précédemment à la partie élastique.

L'enveloppe de la cellule contrairement à ce qui a été présenté précédemment n'est pas destinée à se rompre. La projection du fluide au travers des orifices 19 est réalisée par mise sous pression du fluide à l'aide d'un piston 46. La cellule présente une forme permettant de recevoir un piston. Le principe est le suivant : lors d'un choc, le piston 46 est activé et s'introduit à l'intérieur de la cellule qui par pression provoque l'écoulement du fluide par des ouvertures prévues dans l'enveloppe de la cellule.

Dans la forme de réalisation illustrée, l'enveloppe 48 de la cellule peut présenter tout type de forme présentant un rétrécissement 50 dans lequel le piston 46 de contour correspondant est susceptible de coulisser. Dans la forme illustrée, la cellule présente une forme en T. De manière plus précise elle pourrait par exemple présenter deux parties cylindriques dont une de diamètre plus petit. L'ensemble de la cellule dont la partie rétrécie est fermée par le piston 46 forme le réservoir 24. Dans la partie de dimension plus importante, des trous 52a sont pratiqués. Des tuyaux 54 souples relient les trous 52a à des orifices 19. Le piston 46 est formé d'une tête 58 et d'une tige 60 rigides. La tête 58 du piston est positionnée en vis-à-vis d'un orifice 19: de cette manière, la tige 60 qui est creuse relie un orifice 19 à un trou 52b prévu dans la tête 58 du piston. Le fluide est choisi de viscosité telle qu'il ne s'écoule pas à l'extérieur de la cellule par les trous 52 en dehors de toute collision, à savoir lorsque le piston est dans la position extrémale illustrée sur la figure 5 correspondant à un volume intérieur maximal pour le réservoir 24.

Lors d'un choc sur la partie 6 élastique, le piston 46 est poussé à l'intérieur de la cellule par déformation de la paroi frontale 14 et exerce une pression sur le fluide qui s'écoule alors par les trous 52 au travers de la tige 60 du piston et des tuyaux 54.

Toute autre forme basée sur le même principe est envisageable. Par exemple la tête du piston pourrait ne pas se trouver en vis-à-vis d'un trou 19 et la tige ne pas être creuse. Dans ce dernier cas, le fluide ne s'écoule que par les trous 52a.

Le fluide est projeté sous l'effet de la pression sous forme de jets.

Le fluide 22 de marquage est constitué de tout type de fluide permettant de laisser une trace sur la surface de laquelle il est déversé. La cellule 20 présente une forme et le fluide une viscosité telles que le fluide 22 peut s'écouler au travers des orifices à savoir dans l'exemple illustré au travers des canaux 19.

Le fluide 22 de marquage est de préférence lavable de manière à pouvoir être retiré ensuite de la surface sur laquelle il est déversé, une fois l'impact détecté, visualisé et traité. Le véhicule impacté peut ainsi si la collision n'a pas entrainé de dégât être aussitôt remis en service.

Le fluide 22 de marquage peut consister par exemple en une peinture lavable de viscosité choisie suivant les différents paramètres énumérés ci-dessus. Cependant tout autre type de fluide pourrait convenir comme une encre lavable par exemple.

Le fluide 22 de marquage selon une forme de réalisation particulière peut présenter des propriétés de luminescence permettant de révéler l'impact dans l'obscurité.

Le système fonctionne de la manière suivante :
Comme le montre la figure 2, lorsque le véhicule 2 entre en collision avec une surface et par exemple lorsqu'un véhicule 2 de support au sol entre en collision avec le fuselage 62 d'un aéronef, si la collision est d'une intensité susceptible de provoquer des dégâts sur le fuselage 62 de l'aéronef, la pression exercée sur la portion frontale 14 de la partie 6 élastique se répercute sur les cellules 20.

Dans la forme de réalisation illustrée sur la figure 2, l'enveloppe de certaines des cellules qui sont prises en sandwich entre ladite portion frontale 14 et le cadre 26 de maintien des cellules rompt et le fluide 22 de marquage contenu à l'intérieur s'évacue en passant par des canaux 19 pour se répandre sur la surface contre laquelle le véhicule est entré en collision.

Dans la forme de réalisation illustrée sur la figure 5, qui ne correspond pas à l'invention, la pression exercée sur la portion frontale 14 se répercute plus précisément sur le piston 46 qui exerce une pression sur le fluide contenu dans la cellule 20. Sous l'effet de la pression, le fluide s'évacue par les canaux 19 sous forme de jets pour se répandre comme précédemment sur la surface contre laquelle le véhicule est entré en collision.

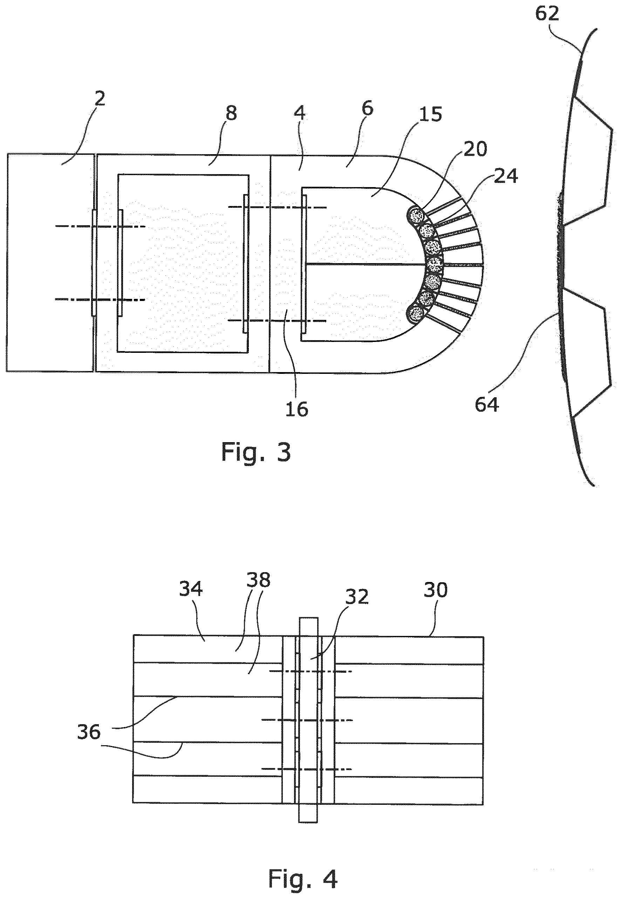

Le fluide 22 de marquage présente des propriétés telles qu'il laisse une trace 64 visible sur la surface en question. Lorsque le véhicule s'éloigne de ladite surface (figure 3), la surface est marquée et l'impact est ainsi visible à l'œil. La zone impactée est délimitée et il peut être vérifié très rapidement si la surface a été endommagée. Le fluide peut ensuite être retiré de la surface pour permettre son traitement ou pour remettre dans l'exemple illustré l'aéronef en service immédiatement dans le cas où il n'y aurait aucun dégât constaté.

La structure du fuselage peut être endommagée et déformée localement : il est nécessaire d'effectuer une réparation localement et la zone impactée est localisée rapidement.

Du fait d'avoir vidé au moins une partie des cellules avec l'impact, le pare-chocs est facilement remis en état en remplaçant la partie élastique. Dans l'exemple illustré, il suffit de séparer par dévissage la partie 6 élastique de la partie 8 structurelle et de la remplacer par une partie 6 élastique neuve et prête à l'emploi. Ainsi, la remise en état du pare-chocs est facile et rapide.

## Revendications

1. Pare-chocs de véhicule **caractérisé en ce qu'**il comporte au moins une partie (6) en matériau élastique présentant une portion (14) frontale courbe formant une cavité (15) intérieure, la portion frontale présentant des orifices (19) permettant de mettre en communication ladite cavité (15) avec l'extérieur de ladite partie élastique, au moins une cellule (20) de fluide de marquage étant prévue à l'intérieur de la cavité, la ou les cellules (20) comprenant une enveloppe (21) faite d'un matériau et de dimensions telles que l'enveloppe des cellules rompt sous l'effet d'une pression déterminée et **en ce qu'**il comporte également des moyens (10, 12) de fixation destinés à la fixation audit véhicule (2).

2. Pare-chocs selon la revendication 1, **caractérisé en ce que** les cellules (20) de fluide (22) de marquage sont maintenues en vis-à-vis des orifices (19) à l'aide d'un cadre (26) structurel, les cellules (20) étant prises en sandwich entre le cadre (26) et la portion frontale (14).

3. Pare-chocs selon l'une des revendications 1 à 2, **caractérisé en ce que** les cellules sont positionnées au moins partiellement le long de la courbure interne de la portion frontale en vis-à-vis desdits orifices (19).

4. Pare-chocs selon l'une des revendications 1 à 3, **caractérisé en ce que** les orifices (19) sont de forme cylindrique de section circulaire.

5. Pare-chocs selon l'une des revendications 1 à 4, **caractérisé en ce que** les cellules (20) sont remplies d'un fluide (22) de marquage d'une viscosité permettant l'évacuation du fluide par les orifices (19).

6. Véhicule muni d'un pare-chocs selon l'une des revendications 1 à 5, la partie (6) élastique étant positionnée au moins partiellement en partie périphérique externe.

7. Procédé de marquage d'une surface avec laquelle un véhicule (2) selon la revendication 6 entre en collision **caractérisé en ce que** lors du choc, la partie frontale du pare-chocs (4) exerce une pression sur la ou les cellules (20) permettant l'écoulement du fluide (22) de marquage au travers d'au moins un orifice (19).

## Patentansprüche

1. Stoßfänger für ein Fahrzeug, **dadurch gekennzeichnet, dass** er mindestens einen Teil (6) aus elastischem Material beinhaltet, der einen gewölbten frontalen Abschnitt (14) aufweist, der einen inneren Hohlraum (15) bildet, wobei der frontale Abschnitt Öffnungen (19) aufweist, die es ermöglichen, den Hohlraum (15) mit dem Außenbereich des elastischen Teils in Verbindung zu bringen, wobei mindestens eine Markierfluidzelle (20) im Innern des Hohlraums vorgesehen ist, wobei die Zelle oder die Zellen (20) eine Hülle (21) umfassen, die aus einem derartigen Material besteht und derartige Abmessungen hat, dass die Hülle der Zellen unter der Einwirkung eines bestimmten Drucks bricht, und dadurch, dass er auch Befestigungsmittel (10, 12) beinhaltet, die zum Befestigen an dem Fahrzeug (2) bestimmt sind.

2. Stoßfänger nach Anspruch 1, **dadurch gekennzeichnet, dass** die Zellen (20) mit Markierfluid (22) mithilfe eines strukturellen Rahmens (26) gegenüber den Öffnungen (19) gehalten werden, wobei die Zellen (20) sandwichartig zwischen dem Rahmen (26) und dem frontalen Teil (14) aufgenommen sind.

3. Stoßfänger nach einem der Ansprüche 1 bis 2, **dadurch gekennzeichnet, dass** die Zellen zumindest teilweise entlang der Innenwölbung des frontalen Abschnitts gegenüber den Öffnungen (19) positioniert sind.

4. Stoßfänger nach einem der Ansprüche 1 bis 3, **dadurch gekennzeichnet, dass** die Öffnungen (19) zylindrisch mit kreisförmigem Querschnitt sind.

5. Stoßfänger nach einem der Ansprüche 1 bis 4, **dadurch gekennzeichnet, dass** die Zellen (20) mit einem Markierfluid (22) mit einer Viskosität gefüllt sind, die das Abführen des Fluids durch die Öffnungen (19) ermöglicht.

6. Fahrzeug mit einem Stoßfänger nach einem der Ansprüche 1 bis 5, wobei der elastische Teil (6) zumindest teilweise am Außenumfang positioniert ist.

7. Verfahren zum Markieren einer Oberfläche, mit der ein Fahrzeug (2) nach Anspruch 6 zusammenstößt, **dadurch gekennzeichnet, dass** bei dem Aufprall der frontale Teil des Stoßfängers (4) einen Druck auf die Zelle oder die Zellen (20) ausübt, der das Abfließen des Markierfluids (22) durch mindestens eine Öffnung (19) ermöglicht.

## Claims

1. Vehicle bumper, **characterized in that** it comprises at least one part (6) made of elastic material having a curved frontal portion (14) forming an internal cavity (15), the frontal portion having orifices (19) that allow said cavity (15) to communicate with the exterior of said elastic part, at least one cell (20) of marking fluid being provided within the cavity, the cell or cells (20) comprising an envelope (21) made of a material and of dimensions such that the envelope of the cells ruptures when subjected to a given pressure, and **in that** it also comprises attachment means (10, 12) intended for attachment to said vehicle (2).

2. Bumper according to Claim 1, **characterized in that** the cells (20) of marking fluid (22) are held facing the orifices (19) by means of a structural frame (26), the cells (20) being sandwiched between the frame (26) and the frontal portion (14).

3. Bumper according to either of Claims 1 and 2, **characterized in that** the cells are positioned at least partially along the internal curvature of the frontal portion, facing said orifices (19).

4. Bumper according to one of Claims 1 to 3, **characterized in that** the orifices (19) are cylindrical, with a circular cross-section.

5. Bumper according to one of Claims 1 to 4, **characterized in that** the cells (20) are filled with a marking fluid (22) whose viscosity permits evacuation of the fluid via the orifices (19).

6. Vehicle provided with a bumper according to one of Claims 1 to 5, the elastic part (6) being positioned at least partially in the outer peripheral part.

7. Method for marking a surface with which a vehicle (2) according to Claim 6 experiences a collision, **characterized in that**, in the moment of impact, the frontal part of the bumper (4) exerts a pressure on the cell or cells (20), allowing the marking fluid (22) to flow through at least one orifice (19).
